# EUROPÄISCHE PATENTSCHRIFT

(11) **EP 2 384 842 B1**
(45) Veröffentlichungstag und Bekanntmachung des Hinweises auf die Patenterteilung: **02.10.2013**
(21) Anmeldenummer: 11162896.2
(22) Anmeldetag: 18.04.2011
(51) Int. Cl.: B23K 1/00, B23K 1/005, B23K 26/22, B23K 26/24, B23K 26/20, C04B 37/00, H01M 8/02, B23K 37/02, B23K 9/032, B23K 31/02, B23Q 9/00, B61B 13/02

(54) **Einrichtung zur Herstellung von entlang räumlicher, in einer Ebene abwickelbarer Verschneidungskurven verlaufenden Schweißnähten für überschwere Rohrfachwerkverbindungen**
Device for weld seams running along spatial intersection curves which are extendible along a level for excessively heavy structural piping connections
Dispositif pour la réalisation de cordons de soudure s'étendant le long de courbes se découpant spatialement et pouvant se dérouler sur une surface pour connexion de charpente tubulaire hyperlourde

(30) Priorität: 05.05.2010 DE 102010028593
(43) Veröffentlichungstag der Anmeldung: 09.11.2011
(73) Patentinhaber: Schweißtechnische Lehr- und Versuchsanstalt Halle GmbH, 06118 Halle (DE); ZIS Industrietechnik GmbH, 08393 Meerane (DE)
(72) Erfinder:
(74) Vertreter: Gulde Hengelhaupt Ziebig & Schneider

(56) Entgegenhaltungen:
- JP-A- 9 234 591
- JP-A- 60 012 275
- JP-U- H0 578 386
- US-A- 4 841 123
- US-A1- 2004 084 545

## Beschreibung

Die Erfindung betrifft eine Einrichtung zur vollmechanisierten Herstellung von entlang räumlicher, in einer Ebene abwickelbarer Kurven gemäß dem Oberbegriff des Anspruchs 1 (siehe z.B., US 4 841 123, besonders entlang von Verschneidungskurven, verlaufenden Schweißnähten für überschwere Rohrfachwerkverbindungen an maritimen Konstruktionen.

Die Trag- und Gründungsstrukturen großer maritimer Konstruktionen, so Explorationsanlagen, Offshore-Windenergieanlagen und Spezialkonstruktionen im Schiffbau sind in aller Regel als geschweißte Stahlkonstruktionen ausgeführt. Fast immer werden geschlossene Profile aus Gründen der Festigkeit, des Korrosionsverhaltens und des Anströmwiderstandes verwendet.

Typischerweise sind sie in Form eines Rohrfachwerkes oder einer Kastenstruktur ausgeführt, wobei wegen des verringerten Schweißaufwandes die Verwendung von Rohren als Fachwerkstreben zunimmt. Die Verbindung zweier Rohre, als Rohrknoten bezeichnet, geschieht, indem das im Durchmesser kleinere der beiden Rohre mit einer räumlich geformten, figuralen Endkontur versehen ist, die sich als Funktion der beiden Rohrdurchmesser, der Rohrwanddicke des kleineren der beiden Rohre, des von ihren Achsen eingeschlossenen Schnittwinkels und deren Kreuzungsabstand auf der Basis trigonometrischer Funktionen berechnen lässt. Versehen mit einer solchen figuralen Endkontur kann das Rohr auf das im Durchmesser größere Rohr, das üblicherweise als Hauptrohr bezeichnet wird, spaltfrei aufgesetzt und mit ihm durch Schweißen stoffschlüssig verbunden werden. Naturgemäß sind die Abmessungen des Rohrknotens unüblich groß, weswegen die entstehende Schweißnahtlänge im Zusammenwirken mit dem großen Nahtquerschnitt, geschuldet vergleichsweise großer Wanddicken, zu einem sehr großen Schweißnahtvolumen führt. Das Schweißen von Rohrknoten ist die hohe Schule der Schweißerei und wird, z.B. im Stahlbau, ausschließlich manuell und nur von speziell geschulten, mit längerer Berufserfahrung ausgestatteten Schweißern vorgenommen, um den durch das gültige Vorschriften- und Regelwerk vorgegebenen Qualitätsanforderungen zu entsprechen.

Die Qualitätsanforderungen an maritime Konstruktionen übersteigen jedoch jene im Stahlbau und verlangen von den Schweißern ununterbrochen volle Konzentration und Aufmerksamkeit, um Schweißnahtfehler, insbesondere Flanken- und Lagenbindefehler, auszuschließen. Das ist bei den aufgrund der Bauteilabmessungen sehr hohen Schweißzeiten von mehreren Stunden kaum durchgängig und reproduzierbar zu gewährleisten. Eine häufige Unterbrechung des Schweißprozesses ist nicht zu vermeiden, weswegen die Produktivität der manuellen Schweißung, gemessen in verarbeitetem Schweißzusatzwerkstoff pro Zeiteinheit und als Abschmelzleistung bezeichnet, gering ist.

Deshalb sind Gerätschaften erforderlich, die ein vollmechanisiertes Schweißen für Rohrverbindungen in den vorgenannten Dimensionen ermöglichen und den Schweißer von der Führung des Schweißbrenners entbinden.

Nachfolgend soll anhand von einigen Beispielen der Stand der Technik beim vollmechanisierten Lichtbogenschweißen an Großbauteilen dargelegt werden. Naheliegend erscheint der Einsatz von konventionellen Industrierobotern, die jedoch wegen ihres kleinen Arbeitsraumes, ihrer Empfindlichkeit und ihrer aufwendigen Programmierung ausscheiden.

Baugeräte (Krane, Bagger..) können durch die Nachrüstung mit Antriebs-, Steuerungs-, Regelungs- und Sensortechnik zu roboterähnlichen Großmanipulatoren weiterentwickelt werden. So ist unter dem Namen "Skywash" eine Lösung bekannt, die auf der Basis einer Betonpumpe einen redundanten Roboterarm geschaffen hat, der zum automatischen Waschen von Flugzeugen verwendet werden kann (Wanner, M.C.:Projektdarstellung HfH, Hochflexible Handhabungssysteme. Februar 1990, KfK-PFT, 153, S.3-29), (Schraft, R.D.; Wanner, M.C.; Herkommer, T.F.:"Skywash"-Aircraft cleaning by robots. 25th International Symposium of Industrial Robots, Proceedings, 25.-27.4.1994, Hannover, S.273-280). Der finanzielle und technische Aufwand für derartige Geräte ist immens, weswegen sie in der industriellen Praxis bis heute kaum Verwendung gefunden haben.

Wirtschaftlich attraktiv hingegen sind Lösungen, bei denen das Großbauteil als Basis verwendet und auf diesem motorisch eine Maschine bewegt wird, die das Werkzeug, d.h. einen Schweißbrenner, eventuell auch einen Schneidbrenner trägt. Bekannt sind Lösungen sowohl für schienengeführte als auch für schienenlose Maschinen.

ln JP 2004141884 A wird z.B. eine Lösung beschrieben, in der ein Wagenkörper vier Räder besitzt, die über ein Zugmittelgetriebe und starre Wellen fest miteinander gekoppelt sind und von einem Motor angetrieben werden. Ein Permanentmagnet erzeugt eine Anpresskraft auf das zu schneidende Bauteil, die durch eine aus magnetischem Werkstoff hergestellte Blendenplatte, selbige über einen Hebel beweglich, abgeschirmt werden kann, um den Wagen einfach vom Bauteil zu entfernen. Die zwangläufige Kopplung der Räder gestattet dem Wagen nur eine geradlinige Bewegung, weswegen auch nur gerade Schweißnähte mit seiner Hilfe herstellbar sind.

Ein schienenloser Wagen für manuell beeinflusstes, aber ferngesteuertes Führen eines Schweiß- oder Schneidbrenners wird in der Patentschrift EP 0 759 337 B1 beschrieben. Vier Räder, starr in einer Wagenkarosserie angeordnet, lassen die Maschine sich auf dem Bauteil bewegen und treiben diese durch Reibschluss an. Die, in Fahrtrichtung gesehen, linken und rechten Räderpaare sind über ein Zugmittel miteinander und mit je einem Antriebsmotor in der Weise gekoppelt, dass durch eine Fernbedienung die Drehzahl des linken und rechten Radpaares unterschiedlich genommen und damit ein Kurvenfahren erreicht werden kann. Um auch schräg zur Schwerkraft liegende Bauteiloberflächen befahren zu können, ist in der Karosserie der Maschine ein Magnet angeordnet, der durch ein nichtmagnetisches Bodenblech eine magnetische Anzugskraft auf das Bauteil ausübt. Der Magnet ist in der Karosserie über einen Hebel beweglich angeordnet, so dass er in einer Endposition nahe dem Bauteil liegt und große Haltekräfte erzeugt, in der anderen Endposition ein größerer Abstand zum Bauteil besteht und sich in dieser der Wagen leicht vom Bauteil entfernen lässt. Die starre Anordnung der vier Räder gestattet wohl die Richtungsänderung, ermöglicht aber statisch bestimmte Vorschubbewegungen nur auf ebenen oder eindimensional gekrümmten Bauteiloberflächen. Das Fahren auf einer Zylindermantelfläche ist möglich, jedoch nur in radialer Richtung. Das Fahren auf doppelt gekrümmten Bauteilen führt in aller Regel dazu, dass ein Rad keinen Kontakt mit den Bauteil besitzt, wodurch der Wagen "kippelt".

Ebenso für den Einsatz auf ebenen Bauteilen, namentlich das Schweißen von Längsnähten in Normal- und Wannenposition, vorgesehen ist die in DD 225 078 A1 beschriebene Lösung. Auch hier rollt ein Vierradfahrwerk reibschlüssig über ein ebenes Bauteil. Um Überbestimmung zu vermeiden und Toleranzen der Ebenheit an den zu schweißenden Bauteilen zu kompensieren, sind die Laufräder kardanisch angelenkt.

In DD 224 519 A1 ist eine Lösung dargelegt, die für das Schweißen von Kehlnähten in kastenförmigen Bauteilstrukturen gedacht ist. Ein Rollenfahrwerk führt die Maschine auf einer ebenen, waagerechten Bauteilgrundfläche, detektiert mit Sensoren Bauteilecken und dreht dann mit einem absenkbaren Hilfsrad die gesamte Maschine hin zur folgenden Schweißkontur.

Ebenfalls nur auf ebenen Bauteiloberflächen einsetzbar ist die in JP 61020700 A beschriebene, auf magnetischen Rollen basierende Lösung für eine vollmechanisierte Schweißbrennerführung. Neben dem Schweißen an senkrechten Wänden ist die Lösung auch für das Schweißen "über Kopf" vorgesehen und kann durch eine spezielle Gestaltung der Magnetrollen auch Ecken umfahren, ihre Bewegungsrichtung von "steigend" auf "über Kopf" umkehren. Noch mehr als bei fest eingebauten, durch ein nichtmagnetisches Bodenblech geschützten Permanentmagneten besteht bei Magnetrollen die Gefahr, dass sich Schlacke, Staub und Späne an den Rollen absetzen, deren Magnetwirkung dadurch verringert und die Führungsgenauigkeit gemindert wird. Das Säubern der Magnetrollen ist mühselig und erfordert, dass der Wagen vom Bauteil entfernt wird.

Eine exakte Führung des Bearbeitungswerkzeuges, sei es ein Schweiß- oder ein Schneidbrenner, ist mit einem schienenlosen Führungswagen nicht zu erreichen. Alle Unzulänglichkeiten der Bauteiloberfläche, wie Riefen, Kanten, Beulen, bilden sich in der Bewegung des Werkzeuges ab und beeinflussen die Bewegungsrichtung des Führungswagens. Die Verbindung zum Bauteil ist immer nur kraftschlüssig. Eine absolute Sicherheit gegen das Verrutschen des Wagens, schlimmstenfalls gegen das Abfallen vom Bauteil, lässt sich hiermit nicht ermöglichen. Dies ist nur schienengeführten Schweiß- und Schneidtraktoren vorbehalten.

Die Lösung in JP 2008200680 A verwendet v-förmig profilierte Rollen, die in eine zu diesen passgenau geformte Schiene von beiden Seiten formschlüssig eingreifen. Einseitig sind die Rollen in Richtung zur Schiene verstellbar ausgebildet, um den Wagen an beliebiger Stelle auf die Schiene aufsetzen und, mit Hilfe einer Feder, die Führung spielfrei einstellen zu können. Die Schiene selbst ist kraftschlüssig mit dem Bauteil verbunden und trägt eine Zahnstange, in die ein von einem Motor über ein Untersetzungsgetriebe angetriebenes Ritzel zum Vorschub des Wagens eingreift. Die Schiene besitzt einen in erster Näherung rechteckigen Querschnitt mit vergleichsweise geringer Höhe bei vergleichsweise großer Breite. Es ist vorstellbar, dass senkrecht zur Schienenhöhe eine Elastizität besteht, die es ermöglicht, in dieser Richtung die Schiene entlang sehr großer Krümmungsradien an ein Bauteil anzupassen. Quer zu dieser Richtung ist die Schiene naturgemäß steif, d.h., nur in einer Ebene liegende Kurven geringer Krümmung lassen sich mit dieser Lösung abfahren.

Eine ähnliche Lösung beschreibt US 5,070,792 A, bei der aber die Schiene als flexibles Stahlband ausgeführt ist, in welche Löcher gestanzt sind, in die ein zahnradähnliches Antriebsrad formschlüssig eingreift. Die Führung des Gerätes erfolgt durch genutete Rollen, die seitlich an das Federblech greifen. Handverstellbare Linearschieber, jeweils im rechten Winkel zueinander und zur Schienenrichtung angeordnet, dienen der Ausrichtung des Schweiß- oder Schneidbrenners zur Naht.

Eine Schienenführung zum Schweißen an zylindrischen Rohren ist in JP 1366338 C dargelegt. Schalenförmige Segmente, die mit einer v-förmig profilierten Schiene versehen sind, werden um das Rohr gelegt und mit bajonettartigen Verbindungselementen zu einer Schale verschlossen, auf die ein motorbetriebener Schweißtraktor aufgesetzt wird. Die schalenförmigen Segmente sind auf den Rohrdurchmesser abgestimmt und müssen für jeden Rohrdurchmesser speziell angefertigt werden. Es ist ausschließlich das Schweißen von Rundnähten möglich. Die Schienenführung liegt in einer Ebene.

Eine ähnliche Lösung, hier mit einem Spanngurt verschlossen, beschreibt FR 2610558 A. Hingegen lassen sich mit der Lösung in JP 60012275 A in geringem Maße auch gekrümmte Schweißnähte herstellen. Das gelingt, indem ein flexibles Stahlband mittels Magneten auf das Bauteil aufgesetzt wird und die Bahnkurve verkörpert, entlang derer sich der Schweißtraktor mit Führungsrollen bewegt. Dadurch, dass das Stahlband nur die Führung bildet und die Vorschubbewegung vom Schweißtraktor realisiert wird kann die Bauteiloberfläche nur eine geringe Neigung besitzen und muss, da der Schweißtraktor ein einfaches Vierradfahrwerk besitzt, eben sein.

Von der Firma KOIKE beworben wird eine aus Hartgummi hergestellte, magnetisch auf dem zu schneidenden Bauteil zu befestigende Führungsschiene (Prospektunterlagen IK72T, KOIKE EUROPE BV, Grote Tocht 19, 1507 CG Zaandam, Holland). Diese ist biegeweich und kann auch entlang räumlicher Konturen ausgerichtet werden. Der Nachteil dieser Schienen besteht, geschuldet ihrem Werkstoff, in ihrer sehr geringen Steifigkeit, die nur kleine, massearme und damit sehr einfach aufgebaute Fahrwagen zu tragen in der Lage ist.

Nach US 4,841,123 A ist eine automatische Schweißeinrichtung zur Ausführung einer Schweißnaht in Sattelform zwischen einem horizontal führenden Rohr und einem vertikal aufsteigenden Rohr unter Nutzung einer vorwiegend einen zylindrischen Querschnitt besitzenden, mit einer Abplattung und einer Spurführung ausgestatteten, kraftschlüssig von einem Träger berollten Schienenführung zur Realisierung einer orbitalen, nicht ebenen Bewegung bekannt. Der Träger besitzt einen eigenen Vorschubantrieb, motorbetriebene Verstelleinrichtungen, einen an diesen montierten Schweißbrenner, so dass seine Zustellbarkeit für mehrere Schweißnahtverläufe, quer zur orbitalen Bewegung der schienengeführten Einrichtung erfolgen kann. Die Spur, auf der der Träger verfahrbar ist, ist am horizontalen Rohr angebracht und es kann somit der Schweißbrenner einem vorbestimmten Weg in mehr als einer senkrechten Ebene folgen. Die Paarung zwischen Schweißeinrichtung und Schienenführung ist ausschließlich kraftschlüssig.

Gemäß JP 9 234591 A ist ebenfalls eine schienengeführte automatische Schweißeinrichtung bekannt. Die Schienenführung ist rohrförmig ausgestaltet und besitzt, symmetrisch links und rechts, an ihr angebrachte Führungsleisten. Die Segmente der rohrförmigen Schienenführung sind mittels Verbindungsmitteln, an jeweils ihren Enden, montier- und demontierbar. Auf den Führungsleisten rollt die Schweißeinrichtung, deren Rollen das Gegenprofil der Führungsleisten besitzen. Ein Motor im Zusammenwirken mit einem Getriebe an der Unterseite mit der Schweißeinrichtung angebracht, sorgt für den Vorschub derselben. Auch bei dieser Lösung besteht eine ausschließlich kraftschlüssige Paarung zwischen Schienenführung und Schweißeinrichtung.

Wie dem vorstehend beschriebenen Stand der Technik zu entnehmen ist, haben die darin genannten Lösungen bezüglich mehrfach gekrümmter Bauteiloberflächen/Nahtverläufen und der definierten, erschütterungsfreien Führung eines Fahrwagens, der einen Schneid- oder Schweißbrenner in genauer Position führen soll, erhebliche Nachteile.

Es ist daher Aufgabe der Erfindung, eine motorisch betriebene, entlang doppelt gekrümmter Schweißnahtverläufe schienengeführte, computergesteuert verfahrbare Einrichtung zu schaffen, die geeignet ist, die Führung eines Schweißbrenners-einschließlich der erforderlichen Pendelbewegungen - entlang dieser Schweißnahtverläufe vorzunehmen, den Schweißer von physisch und psychisch anstrengender Arbeit zu entlasten und eine hohe, gleichmäßige Schweißnahtqualität, bei gleichzeitiger signifikant gesteigerter Abschmelzleistung, zu erzielen.

Die Aufgabe der Erfindung wird wie folgt gelöst, wobei hinsichtlich der grundlegenden erfinderischen Gedanken auf den Patentanspruch 1 verwiesen wird. Die weitere Ausgestaltung der Erfindung erfolgt gemäß der Ansprüche 2 bis 7.

Weitere Hinweise zur Darlegung der Erfindung sind erforderlich.

Zur Herstellung eines überschweren Rohrknotens wird eine Führungsschiene an einem Element des Rohrknotens befestigt. Überschwere Rohrknoten sind dabei solche, die bei beiden Elementen einen Rohrdurchmesser von mehr als 1000 mm aufweisen. Die Führungsschiene wird dabei kraft- und/oder formschlüssig so befestigt, dass der zur Verbindungskurve der beiden Elemente des Rohrknotens zeigende Schienenstrang der Führungsschiene zu dieser einen zumindest annähernd konstanten Abstand besitzt. Die Führungsschiene wird zusammengesetzt aus einzelnen Schienensegmenten, die durch formschlüssige Segmentverbinder verbunden werden. Jedes Schienensegment ist ein Unikat und ist so vorgeformt, dass es der Abwicklung der Verbindungskurve in eine Ebene parallel zu der Rohrachse des Elementes des Rohrknotens entspricht, an dem es befestigt ist. Die Ausdehnung der Führungsschiene lotrecht zur Ebene ist gering im Vergleich zu ihren sonstigen Abmessungen.

Die Befestigung der Führungsschiene am Element des Rohrknotens erfolgt kraftund/oder formschlüssig durch die Nutzung von mindestens drei Schienenfüßen pro Schienensegment. Die Schienenfüße sind mit zumindest zwei Halteelementen versehen, die jeweils kugelgelenkig mit einer Verbindungsbrücke untereinander und diese wiederum kugelgelenkig mit dem Schienensegment verbunden sind.

Die Schienensegmente bestehen aus zwei Schienensträngen, die durch Schwellen gelenkig miteinander verbunden sind, derart, dass die Spurbreite der Schienensegmente konstant gehalten wird.

Entlang der Führungsschiene programmgesteuert verfahrbar ist gemäß der Erfindung eine Führungsmaschine mit einem stirnseitigen Flansch, der in einer senkrecht auf die Richtung der Führungsschiene stehenden Ebene beweglich ist. Mit Hilfe des am Flansch befestigten verstellbaren Werkzeughalters ist die Führungsmaschine in der Lage, ein schweißtechnisches Werkzeug, z.B. einen Schneid- oder Schweißbrenner, zu tragen und entlang der Verbindungskurve der Elemente des überschweren Rohrknotens zu führen.

Die Führungsmaschine besitzt gemäß der Erfindung zwei Drehgestelle, die an ihrer Vorder- und Hinterseite befestigt sind. Jedes Drehgestell verfügt über mindestens drei Spurrollen, die an der flachen Seite der Schiene diese formschlüssig umfassen, wobei auf jeder Seite der Schiene zumindest eine Spurrolle vorhanden ist. Mit dem Maschinenkörper ist das dem Flansch näher liegende Drehgestell drehgelenkig entlang einer ersten Drehachse, die parallel zur Bahnnormale an einen Schienenstrang ist, und entlang einer zweiten Drehachse, senkrecht hierzu und rechtwinklig zur Tangente an den Schienenstrang, verbunden. Die Verbindung des zweiten Drehgestells mit dem Maschinenkörper ist kugelgelenkig.

Mittels eines aus dem Maschinenkörper herausragenden Ritzels, das vom im Maschinenkörper befindlichen ersten Antrieb getrieben wird, greift die Führungsmaschine in eine auf der Führungsschiene angebrachte Zahnstange ein. Zwei weitere, im Maschinenkörper befindliche Antriebe, der zweite Antrieb und der dritte Antrieb, wirken auf den Flansch derart, dass dieser schiebebeweglich in zwei Richtungen senkrecht zur Tangente an einen Schienenstrang ist.

Mit Hilfe des im Maschinenkörper vorhandenen Maschinencomputers kann sich die Führungsmaschine programmgesteuert bewegen. Der Maschinencomputer verleiht der Führungsmaschine eine Eigenintelligenz insofern, dass in ihm abgelegte Programme eine autarke Bewegung am Flansch der Führungsmaschine entlang vorgegebener, dreidimensionaler Bahnkurven gestatten.

Der Maschinencomputer dient auch der, bevorzugt drahtlosen, Kommunikation mit dem Systemcomputer. Letzterer versteht sich als Leitstandcomputer, der Daten aus verschiedenen Datenströmen sammelt, verknüpft und archiviert, gleichzeitig auf das Bewegungsverhalten der Führungsmaschine Einfluss nimmt, die Steuerung des aktuellen Bewegungsverhaltens jedoch dem Maschinencomputer überlässt.

Ein stetiger Datenstrom, das komplette Bewegungsverhalten der Führungsmaschine beinhaltend, wird vom Maschinencomputer zum Steuerungscomputer gesendet, vom Systemcomputer mit technologischen Daten, z.B. von der Schweißstromquelle zur Verfügung gestellt, verknüpft und zu Zwecken der Qualitätssicherung archiviert.

Auf jedem Schienensegment befindliche, nicht entfernbare Codierungen werden von der Führungsmaschine bei ihrer Passage mit Hilfe eines Sensors gelesen, zu einer im Rohrknotenkoordinatensystem eindeutigen Position decodiert und dem Datenstrom als ein Positionsstempel aufgeprägt.

Die Erfindung soll nachfolgend anhand von Ausführungsbeispielen näher beschrieben werden.

Hierbei zeigen:
- Figur 1: einen überschweren Rohrknoten 1 mit am größeren Element des Rohrknotens 2 befestigter Führungsschiene 4,
- Figur 2: einen überschweren Rohrknoten 1 mit am kleineren Element des Rohrknotens 3 befestigter Führungsschiene 4,
- Figur 3: die Ansicht eines Schienensegments 5,
- Figur 4: den äußeren Aufbau der Führungsmaschine 16,
- Figur 5: den inneren Aufbau der Führungsmaschine 16 mit einem ebenen Parallelkurbelgetriebe 26,
- Figur 6: eine Variante des inneren Aufbaus der Führungsmaschine 16 unter Nutzung einer räumlichen Parallelstruktur zur Bewegung des Flansches 22 und
- Figur 7: die Energieversorgung der Führungsmaschine 16 mit Hilfe eines angekoppelten Batteriewagens 37.

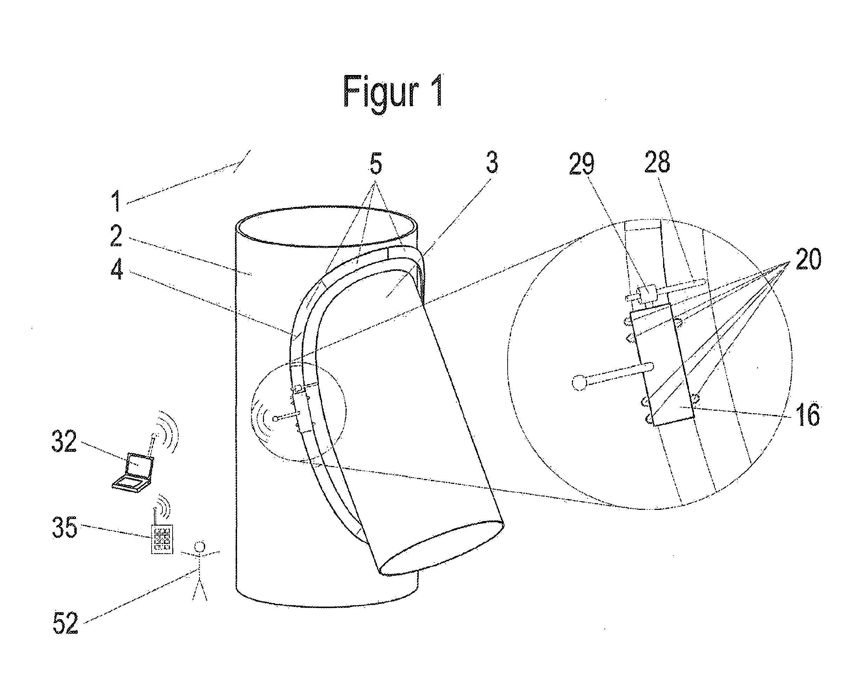

Ein erstes Ausführungsbeispiel entsprechend Figur 1 zeigt einen typischen überschweren Rohrknoten 1, wobei eine Person 52 als Größenvergleich dargestellt ist. Am Rohrknoten 1 ist auf dem größeren Element des Rohrknotens 2 die Führungsschiene 4 befestigt, bestehend aus einer größeren Zahl von Schienensegmenten 5. Die Führungsschiene 4 erstreckt sich damit auf der Mantelfläche des größeren Elementes des Rohrknotens 2. Der Querschnitt der Führungsschiene 4 ist flach, das heißt, deren Ausdehnung lotrecht auf die Mantelfläche des größeren Elementes des Rohrknotens 2 ist klein im Vergleich zu ihrer Spurweite.

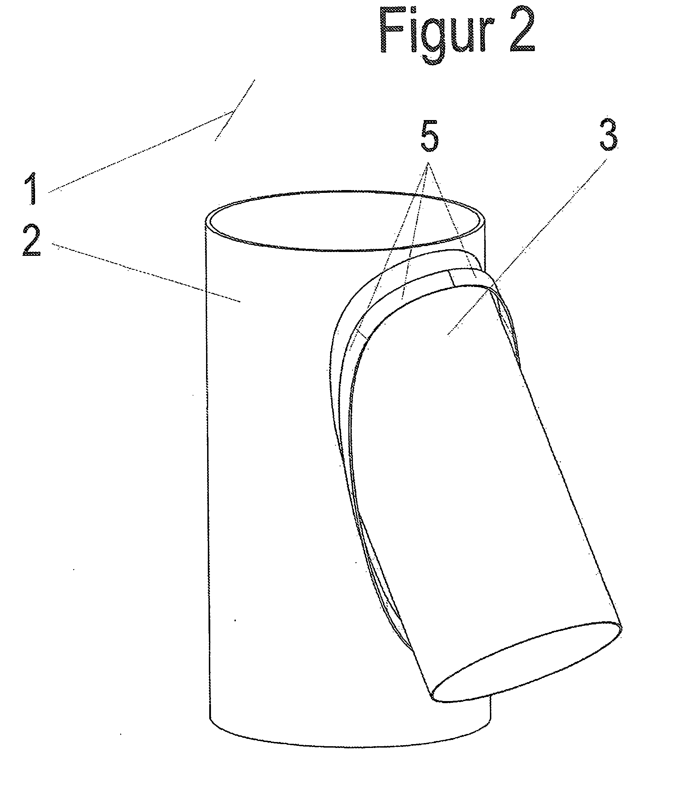

Hingegen ist in Figur 2 die Lage der Führungsschiene 4 variiert derart, dass sie auf dem kleineren Element des Rohrknotens 3 angebracht ist. Damit bewegt sich eine Führungsmaschine 16 auf der Mantelfläche des kleineren Elementes des Rohrknotens 3.

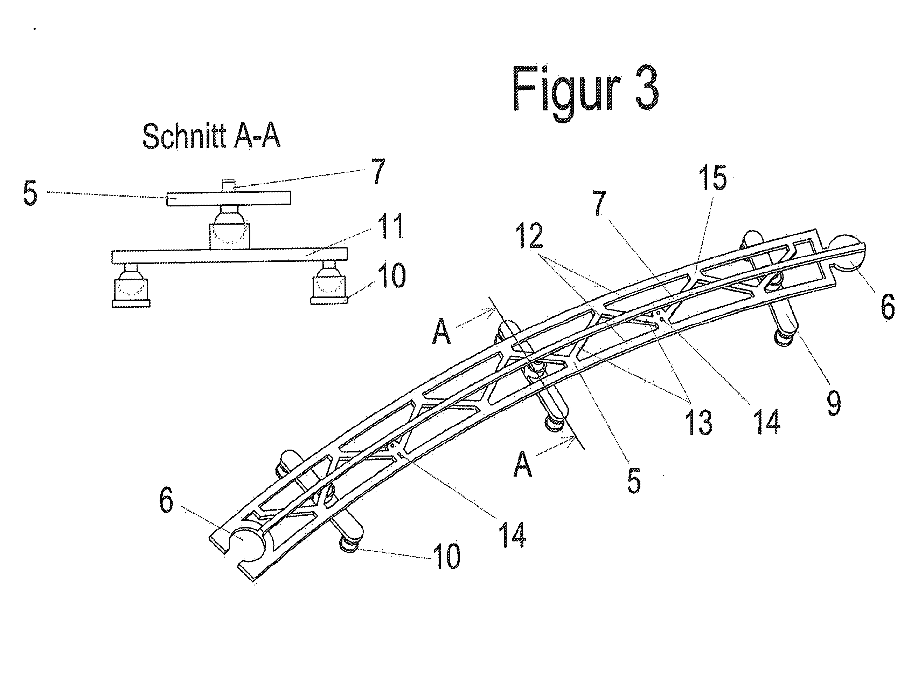

Die Führungsschiene 4 ist aus einzelnen Schienensegmenten 5 entsprechend Figur 3 zusammengesetzt, indem jedes der Schienensegmente 5 an seinem Ende jeweils einen positiv und einen negativ geformten Segmentverbinder 6 besitzt, mit dem es spaltfrei, form- und kraftschlüssig mit seinen Nachbarsegmenten verbunden ist. Dazu besitzt das Schienensegment 5 noppenförmige Ausstülpungen an seinem einen Stoßende, die in gleich geformte Ausschnitte am entgegengesetzten Ende eingreifen.

Jedes Schienensegment 5 besteht aus zwei Schienensträngen 12, die über Schwellen 13 miteinander verbunden sind in der Weise, dass die Schienenstränge 12 und die Schwellen 13 monolithisch aus einem aus Blech ausgeschnittenen Teil bestehen und stoffschlüssige Gelenke miteinander bilden, so dass sich die Schienenstränge 12, bei annähernd konstant bleibender Spurweite, leicht gegeneinander verschrauben lassen. In der neutralen Faser jedes Schienensegmentes, d.h. in der Mitte zwischen den beiden Schienensträngen 12, angebracht ist eine Zahnstange 7, wobei die Teilung der Führungsschiene 4 in Schienensegmente 5 so erfolgt, dass die Zahnstangen 7 zweier benachbarter Segmente spaltfrei aneinander anschließen.

Zur Befestigung der Schienensegmente 5 auf dem größeren oder kleineren Element des Rohrknotens 2 oder 3 besitzt jedes Schienensegment 5 zumindest drei Schienenfüße 9. Jeder Schienenfuß 9 besteht wiederum aus zumindest zwei Halteelementen 10, die z.B. magnetisch oder nach dem Prinzip des Haftsaugens wirken, und deren Grundfläche vernachlässigbar klein zum Krümmungsradius des größeren oder kleineren Elementes des Rohrknotens 2, 3 ist. Diese Halteelemente 10 sind kugelgelenkig mit einer Verbindungsbrücke 11 verbunden, die wiederum mit dem Schienensegment 5 in der neutralen Faser kugelgelenkig verbunden ist. Weiterhin besitzt jedes Schienensegment 5 eine fest mit ihm verbundene Segmentcodierung 14, die eine eindeutige Identifikation des Segmentes ermöglicht. Die Codierung kann, wie in Figur 3 dargestellt, eine Binärkodierung ähnlich einer Lochkarte, ein Strichcode oder dergleichen sein.

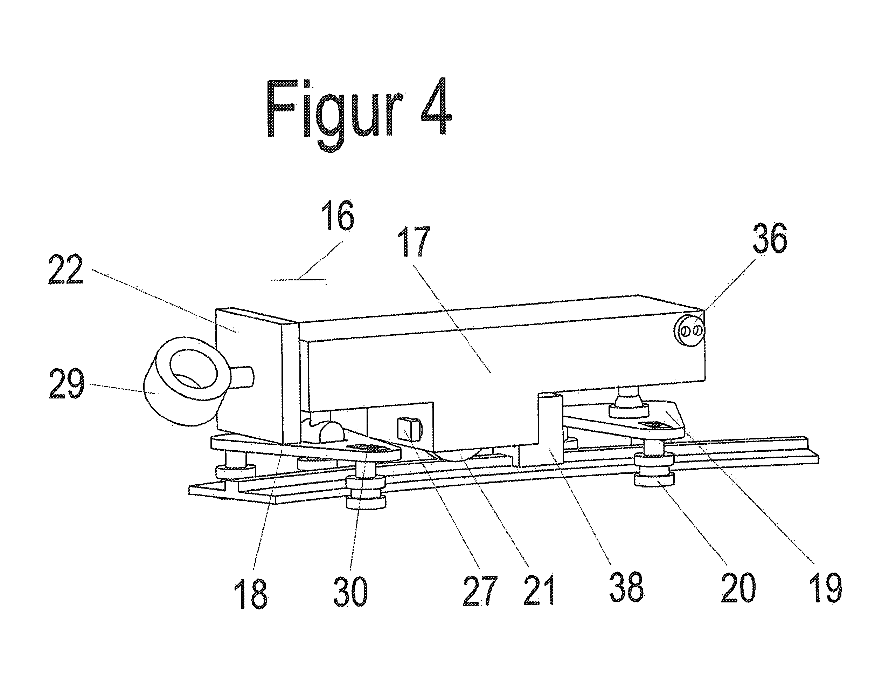

Auf die Führungsschiene 4 wird die Führungsmaschine 16 gemäß der Erfindung entsprechend Figur 4 aufgesetzt, indem die auf einem ersten Drehgestell 18 und einem zweiten Drehgestell 19 angebrachten Spurrollen 20 mit der Führungsschiene 4 und das aus dem quaderförmigen Maschinenkörper 17 herausragende Ritzel 21 mit der Zahnstange 7 in Eingriff gebracht werden. Durch eine Andruckeinrichtung 30 wird der Eingriff der Spurrollen 20 mit der Führungsschiene 4 spielfrei gemacht. Naturgemäß kann der überschwere Rohrknoten 1 zur Bearbeitung nicht in eine Vorzugslage bewegt werden, weswegen die Führungsmaschine 16 so ausgelegt sein muss, dass sie in steigender und Überkopfposition in der Lage ist zu arbeiten.

Die Drehgestelle 18, 19 sind mit dem Maschinenkörper 17 gelenkig verbunden. Das näher zum Flansch 22 liegende erste Drehgestell 18 ist durch zwei seriell nacheinander angeordnete Drehgelenke mit dem Maschinenkörper 17 verbunden, indem eine erste Drehachse sich lotrecht zur Ausdehnungsebene des ersten Drehgestelles 18 erstreckt und eine zweite Drehachse so verläuft, dass sie zu dieser und zur Bahntangente an die Schienenstränge 12 senkrecht ist. Das zweite Drehgestell 19 ist mit dem Maschinenkörper 17 kugelgelenkig verbunden.

Das Ritzel 21 wird vom mit dem Maschinenkörper 17 verbundenen ersten Antrieb 23 angetrieben, welcher wiederum durch einen ebenso im Maschinenkörper 17 angeordneten Maschinencomputer 31 im Sinne einer numerisch gesteuerten Bewegungsachse beeinflusst wird.

Am Maschinenkörper 17 ist eine Absturzsicherung 38 befestigt. Diese greift in die auf der Führungsschiene 4 befestigte Zahnstange 7 und verhindert, dass bei der Bearbeitung in steigender Position durch wie auch immer geartete Defekte die Führungsmaschine 16 auf der Führungsschiene 4 sich in Richtung der Schwerkraft ungebremst bewegen kann. Gleichzeitig jedoch besitzt die Absturzsicherung 38 einen Totbewegungsbereich, der ungehinderte reversierende Bewegungen der Führungsmaschine 16 entlang der Führungsschiene 4 in einem bestimmten Maß ermöglicht.

An der zur Führungsschiene 4 zeigenden Seite des Maschinenkörpers 17 angebracht ist ein Codierungssensor 27, der die Aufgabe hat, die an den einzelnen Schienensegmenten 5 vorhandene Segmentcodierung 14 zu lesen und an den Maschinencomputer 31 zu übertragen. Der Maschinencomputer 31 decodiert das Signal und fügt es verzögerungslos in den für einen Systemcomputer 32 bestimmten Datenstrom ein.

Es sei darauf hingewiesen, dass die Übertragung des Datenstromes nicht online, also die umgehende Übertragung der Daten vom Maschinencomputer 31 an den Systemcomputer 32, erfolgen muss wie ebenfalls nicht erforderlich ist, dass laufend eine Kommunikationsverbindung zwischen dem Maschinencomputer 31 und dem Systemcomputer 32 besteht. Um trotzdem zu späterem Zeitpunkt eine Synchronisation des an der Führungsmaschine 16 entstehenden Datenstromes mit anderen Datenströmen zu ermöglichen versieht der Maschinencomputer 31 den Datenstrom mit einem Zeitstempel.

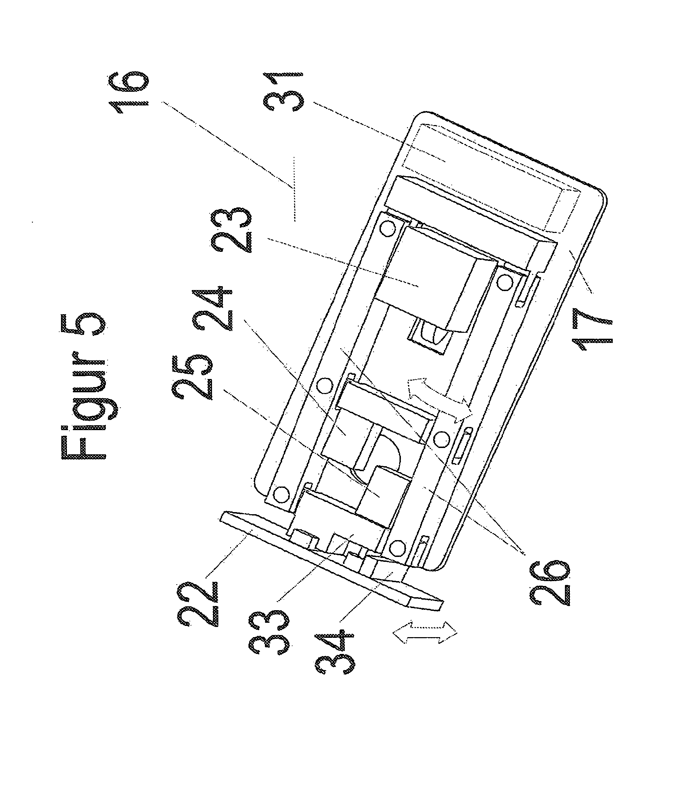

Im Maschinenkörper 17 befinden sich zwei weitere Antriebe, der zweite Antrieb 24 und der dritte Antrieb 25. Sie dienen entsprechend Figur 5 der gesteuerten Schiebebewegung des Flansches 22 in einer Ebene senkrecht zu der vom ersten Antrieb 23 realisierten Bewegungsrichtung.

Dabei ist der zweite Antrieb 24 zwischen dem Maschinenkörper 17 und einem Parallelkurbelgetriebe 26 angeordnet, das gestellseitig ebenfalls am Maschinenkörper 17 befestigt ist. Auf dem Abtriebsglied des Parallelkurbelgetriebes 26, einer Koppel 33, befindet sich der dritte Antrieb 25 und eine senkrecht zur Bewegungsebene des Parallelkurbelgetriebes 26 verlaufende Linearführung 34, die beide mit dem Flansch 22 verbunden sind und diesen entlang der Achse der Linearführung 34 linear bewegen. Alle drei Antriebe 23, 24 und 25 sind im quaderförmigen Maschinenkörper 17 integriert und geschützt.

Der zweite Antrieb 24 und der dritte Antrieb 25 werden, in identischer Weise wie der erste Antrieb 23, vom Maschinencomputer 31 im Sinne numerisch gesteuerter Bewegungsachsen beeinflusst, so dass der Flansch 22 der Führungsmaschine 16 relativ zur Führungsschiene 4 beliebige programmierte Bahnbewegungen auszuführen in der Lage ist.

Die programmierte Bahnbewegung kann manuell mit Offsetwerten korrigiert und an die realen geometrischen Bedingungen angepasst werden, indem über eine manuelle Fernsteuereinrichtung 35 Korrekturwerte an den Maschinencomputer 31 gesendet werden, die dieser mit der gespeicherten Bahnbewegung verknüpft und die Antriebe 23, 24 und 25 entsprechend ansteuert.

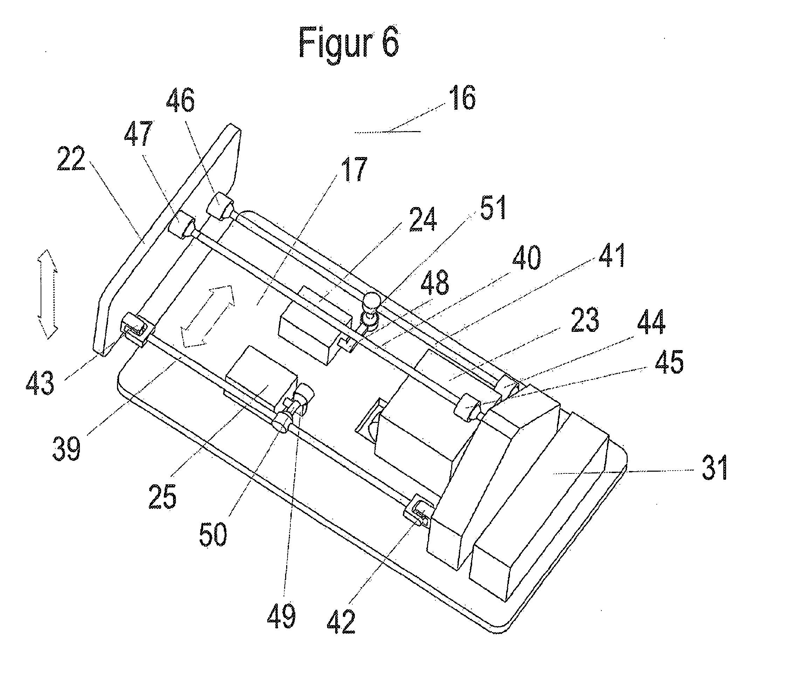

Eine konstruktive Variante zur Bewegung des Flansches 22 zeigt Figur 6. Zwischen dem Flansch 22 und dem Maschinenkörper 17 gelenkig angeordnet sind drei Koppelstangen gleicher Länge, eine erste Koppelstange 39, eine zweite Koppelstange 40 und eine dritte Koppelstange 41. Eine der Koppelstangen ist mit zwei Kreuzgelenken, einem ersten Kreuzgelenk 42 und einem zweiten Kreuzgelenk 43, ausgestattet, die beiden anderen Koppelstangen mit Kugelgelenken 44, 45, 46, 47. Damit ist der Flansch 22 in zwei Achsen zum Maschinenkörper 17 schiebebeweglich. Die beiden Antriebe 24 und 25 sind fest mit dem Maschinenkörper 17 verbunden und treiben über Winkelhebel 48, 49 und Koppelstangen 50, 51 den Flansch 22 an. Es entsteht ein nichtlineares Transformationsverhalten der Bewegung an den Antrieben 24, 25 zur Bewegung des Flansches 22, das vom Maschinencomputer 31 rechentechnisch kompensiert werden muss.

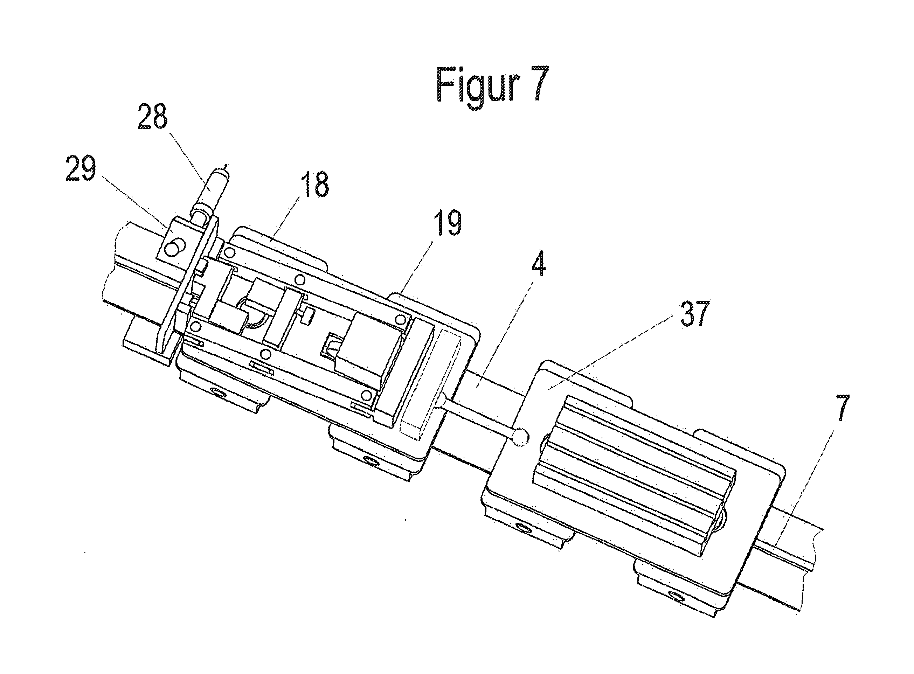

Zur Stromversorgung der Führungsmaschine 16 wird eine Kleinspannung verwendet, die von einer im Rohrknotenkoordinatensystem festen Stromversorgung über einen Anschlussstecker 36 in den Maschinenkörper 17 geleitet wird. Wahlweise kann die Führungsmaschine 16 auch autark arbeiten, indem entsprechend Figur 7 der Führungsmaschine 16 ein Batteriewagen 37 angehängt ist.

Zusammenfassend können die Vorteile der Erfindung wie folgt beschrieben werden: Die erfinderische Lösung dient der Ablösung manueller, physisch und psychisch schwerer Tätigkeit bei gleichzeitig erheblicher Steigerung der Effizienz der schweißtechnischen Bearbeitung. Programmierte und jederzeit reproduzierbare Parameter gestatten eine zuverlässige Ausführung der schweißtechnischen Bearbeitung in gleichbleibender und sehr hoher Qualität. Die Ausstattung der technischen Lösung mit verteilter Computerintelligenz ermöglicht eine große Vielfalt der schweißtechnischen Bearbeitung und deren Anpassung an aktuell herrschende geometrische, werkstofftechnische und Umweltbedingungen. Gleichzeitig ist eine umfassende Dokumentation der schweißtechnischen Bearbeitung gewährleistet.

### Bezugszeichenliste

- 1 -: Überschwerer Rohrknoten
- 2 -: Größeres Element des Rohrknotens
- 3 -: Kleineres Element des Rohrknotens
- 4 -: Führungsschiene
- 5 -: Schienensegment
- 6 -: Segmentverbinder
- 7 -: Zahnstange
- 8 -: Profilierte Schienenflanke
- 9 -: Schienenfuß
- 10 -: Halteelement
- 11 -: Verbindungsbrücke
- 12 -: Schienenstrang
- 13 -: Schwellen
- 14 -: Segmentcodierung
- 15 -: Stoffschlüssiges Drehgelenk
- 16 -: Führungsmaschine
- 17 -: Maschinenkörper
- 18 -: Erstes Drehgestell
- 19 -: Zweites Drehgestell
- 20 -: Spurrolle
- 21 -: Ritzel
- 22 -: Flansch
- 23 -: Erster Antrieb
- 24 -: Zweiter Antrieb
- 25 -: Dritter Antrieb
- 26 -: Parallelkurbelgetriebe
- 27 -: Codierungssensor
- 28 -: Schweißtechnisches Werkzeug
- 29 -: Verstellbarer Werkzeughalter
- 30 -: Andruckeinrichtung
- 31 -: Maschinencomputer
- 32 -: Systemcomputer
- 33 -: Koppel
- 34 -: Linearführung
- 35 -: manuelle Fernsteuereinrichtung
- 36 -: Anschlussstecker
- 37 -: Batteriewagen
- 38 -: Absturzsicherung
- 39 -: Erste Koppelstange
- 40 -: Zweite Koppelstange
- 41 -: Dritte Koppelstange
- 42 -: Erstes Kreuzgelenk
- 43 -: Zweites Kreuzgelenk
- 44 -: Erstes Kugelgelenk
- 45 -: Zweites Kugelgelenk
- 46 -: Drittes Kugelgelenk
- 47 -: Viertes Kugelgelenk
- 48 -: Erster Winkelhebel
- 49 -: Zweiter Winkelhebel
- 50 -: Vierte Koppelstange
- 51 -: Fünfte Koppelstange
- 52 -: Person

## Patentansprüche

1. Einrichtung zur Herstellung von entlang räumlicher, in eine Ebene abwickelbarer Verschneidungskurven verlaufenden Schweißnähten für überschwere Rohrfachwerkverbindungen an Rohrknoten (1) in Form einer auf zweisträngigen Führungsschienen (4) verfahrbaren Führungsmaschine (16), wobei die Führungsschienen (4) aus einzelnen Schienensegmenten (5) zusammengesetzt sind, innerhalb der Führungsschienen (4) eine Zahnstange (7) vorhanden ist, in welche ein mittels eines ersten Antriebes (23), der sich im Maschinenkörper (17) befindet, angetriebenes Ritzel (21) eingreift und die Führungsmaschine (16) verbunden ist mit einem Steuerungscomputer (31), der dessen Bewegung steuert, die darüber hinaus mit einer manuellen Fernsteuereinrichtung (35) beeinflusst werden kann und einer Protokollierung des Bewegungsverhaltens der Führungsmaschine (16) durch den Systemcomputer (32), wobei die beiden Schienenstränge (12) vermittels Gelenken, die sowohl form- als auch stoffschlüssiger Art sein können, so zueinander geführt sind, dass eine Relativbewegung entlang der Schienenstrangachse verhindert und das Spurmaß der Führungsschiene (4) konstant gehalten wird und die Ausdehnung der Schienensegmente (5) in Richtung senkrecht zum Schienenstrang (12) und senkrecht zum Spurmaß klein ist, **dadurch gekennzeichnet, dass**
die Führungsschiene (4) auf die Form der räumlichen Verschneidungskurve angepasst ist, indem sie aus im Ausgangszustand ebenen, entsprechend der Abwicklung der Verschneidungskurven vorgeformten und zueinander geometrisch unterschiedlichen Schienensegmenten (5) besteht, die so unterteilt und mit formschlüssigen Segmentverbindern (6) untereinander verbunden sind, dass an den Verbindungsstellen ein nahtloses Aneinanderfügen der Zahnstangen (7) und der Schienenstränge (12) möglich ist und die Führungsschienen (4) mittels form- und/oder kraftschlüssiger Verbindungen in einem konstanten Normalabstand zur Schweißfuge an dem größeren oder kleineren Element der Rohrknoten (2, 3) befestigt sind,
und dass auf der Führungsschiene (5) eine programmgesteuerte
Führungsmaschine (16), bestehend aus einem Maschinenkörper (17) und zwei Drehgestellen (18), (19), die jeweils mindestens drei Spurrollen (20) tragen, verfahrbar ist, wobei jeder Schienenstrang (12) von zumindest einer Spurrolle (20) eines Drehgestelles (18), (19) berollbar ist und mit diesem sowohl formschlüssig als auch kraftschlüssig vorgespannt im Eingriff steht, wobei mit dem Maschinenkörper (17) das erste, dem Flansch (22) näher liegende Drehgestell (18) eine Drehachse lotrecht zur durch den Verlauf der Schienenstränge (12) vorgegebenen Bahntangente und Bahnnormale und eine Drehachse um die Bahnnormale besitzt und das zweite Drehgestell (19) relativ zum Maschinenkörper (17) kugelgelenkig beweglich ist.

2. Einrichtung zur Herstellung von entlang räumlicher, in einer Ebene abwickelbarer Verschneidungskurven verlaufenden Schweißnähten nach Anspruch 1,
**gekennzeichnet dadurch,**
**dass** der Maschinenkörper (17) zwei weitere Antriebe, den zweiten Antrieb (24) und den dritten Antrieb (25), enthält, die die Bewegung eines Flansches (22), der Teil des Maschinenkörpers (17) ist, entlang zweier Bewegungsachsen, die lotrecht aufeinander stehen und lotrecht zur von der Führungsschiene (16) vorgegebenen Bewegungsrichtung verlaufen, ermöglichen.

3. Einrichtung zur Herstellung von entlang räumlicher, in einer Ebene abwickelbarer Verschneidungskurven verlaufenden Schweißnähten nach Anspruch 2,
**gekennzeichnet dadurch,**
**dass** die zwischen dem Maschinenkörper (17) und dem Flansch (22) angeordnete und von den Antrieben (24, 25) angetriebene Getriebestruktur aus der Kombination einer Parallelkurbel (26) und einer Linearführung (34) besteht.

4. Einrichtung zur Herstellung von entlang räumlicher, in einer Ebene abwickelbarer Verschneidungskurven verlaufenden Schweißnähten nach Anspruch 2,
**gekennzeichnet dadurch,**
**dass** der Flansch (22) mit dem Maschinenkörper (17) durch drei Koppelstangen (39, 40, 41) und räumliche Gelenke (42, 43, 44, 45, 46, 47) so verbunden ist, dass er in einer Ebene, die lotrecht auf der Tangentialrichtung der Schienenstränge (12) steht, schiebebeweglich ist und über je einen Winkelhebel (48, 49) und Koppelstangen (50, 51) die beiden Antriebe, der zweite Antrieb (24) und der dritte Antrieb (25), beide fest mit dem Maschinenkörper (17) verbunden, mit dem Flansch (22) gekoppelt sind.

5. Einrichtung zur Herstellung von entlang räumlicher, in einer Ebene abwickelbarer Verschneidungskurven verlaufenden Schweißnähten nach Anspruch 4,
**gekennzeichnet dadurch,**
**dass** jedes Schienensegment (5) an einer definierten Position mit einer elektrisch, fotooptisch, induktiv, kapazitiv oder taktil lesbaren Segmentcodierung (14) versehen ist, die von einem Codierungssensor (27) im Maschinenkörper (17) gelesen und im Moment des Lesens an den Systemcomputer (32) sendbar ist.

6. Einrichtung zur Herstellung von entlang räumlicher, in einer Ebene abwickelbarer Verschneidungskurven verlaufenden Schweißnähten nach Anspruch 5,
**gekennzeichnet dadurch,**
**dass** die Energieversorgung der Führungsmaschine (16) mit einer Kleinspannung erfolgt, die diese wahlweise über einen Anschlussstecker (36) von einer festen Stromversorgung oder einem an die Führungsmaschine (16) angehängten und von ihr gezogenen, fahrwerksseitig identisch zu dieser aufgebauten Batteriewagen (37) erhält.

7. Einrichtung zur Herstellung von entlang räumlicher, in einer Ebene abwickelbarer Verschneidungskurven verlaufenden Schweißnähten nach Anspruch 6,
**gekennzeichnet dadurch,**
**dass** die Führungsmaschine (16) an ihrem Maschinenkörper (17) eine Absturzsicherung (38) besitzt, die in die Zahnstange (7) der Führungsschiene (4) eingreift und einen Totbewegungsbereich besitzt, der ungehinderte Reversierbewegungen entlang der Schienenführung (4) ermöglicht.

## Claims

1. A device for producing weld seams running along spatial intersection curves which are extendible along a level for excessively heavy structural piping connections at pipe junctions (1) in the form of a guiding machine (16) that can travel on double-track guide rails (4), wherein the guide rails (4) are composed of individual rail segments (5), a rack (7) is present within the guide rails (4), with which meshes a pinion (21) driven by means of a first drive (23) located in the machine body (17), and the guiding machine (16) is connected to a control computer (31) which controls the movement thereof, which can be furthermore influenced by a manual remote control device (35), and a recording of the movement behaviour of the guiding machine (16) by the system computer (32), wherein the two rail tracks (12) are guided with respect to each other by means of joints, which can be both of a positive-fit or material-fit type, such that a relative movement along the rail track axis is prevented and the track gauge of the guide rail (4) is maintained constant; and
the extension of the rail segments (5) in a direction perpendicular to the rail track (12) and perpendicular to the track gauge is small,
**characterized in that**
the guide rail (4) is adapted to the form of the spatial intersection curve by consisting of rail segments (5) that are plane in their original state, preformed according to the extension of the intersection curves and geometrically different from each other, which rail segments are subdivided and connected to each other by positive segment connectors (6) such that a seamless joining together of the racks (7) and the rail tracks (12) is possible at the connections, and the guide rails (4) are fastened to the larger or smaller element of the pipe junctions (2, 3) by means of positive and/or non-positive connections at a constant normal distance from the welding joint; and
that a program-controlled guiding machine (16) consisting of a machine body (17) and two bogies (18), (19), which each carry at least three guide rolls (20), can travel on the guide rail (5), wherein at least one guide roll (20) of one bogie (18), (19) can roll on each rail track (12) and is in mesh therewith, biased both positively and non-positively,
wherein, with the machine body (17), the first bogie (18) located closer to the flange (22) possesses an axis of rotation perpendicular to the trajectory tangent and trajectory normal pre-defined by the course of the rail tracks (12) and an axis of rotation around the trajectory normal, and the second bogie (19) is movable relative to the machine body (17) by means of a ball and socket joint.

2. The device for producing weld seams running along spatial intersection curves which are extendible along a level according to claim 1,
**characterized in that**
the machine body (17) contains two more drives, the second drive (24) and the third drive (25), which enable the movement of a flange (22), which is part of the machine body (17), along two axes of motion perpendicular to each other and perpendicular to the direction of motion pre-defined by the guide rail (16).

3. The device for producing weld seams running along spatial intersection curves which are extendible along a level according to claim 2,
**characterized in that**
the transmission structure arranged between the machine body (17) and the flange (22) and driven by the drives (24, 25) consists of the combination of a parallel crank (26) and a linear guide (34).

4. The device for producing weld seams running along spatial intersection curves which are extendible along a level according to claim 2,
**characterized in that**
the flange (22) is connected to the machine body (17) by three coupling rods (39, 40, 41) and spatial joints (42, 43, 44, 45, 46, 47) so as to be movable in a plane perpendicular to the tangential direction of the rail tracks (12) and the two drives, the second drive (24) and the third drive (25), both firmly connected to the machine body (17), are each coupled to the flange (22) by way of a bent lever (48, 49) and coupling rods (50, 51).

5. The device for producing weld seams running along spatial intersection curves which are extendible along a level according to claim 4,
**characterized in that**
each rail segment (5) is provided at defined position with an electrically, photo-optically, inductively, capacitively or tactilely readable segment coding (14) which is read by a coding sensor (27) in the machine body (17) and can be sent to the system computer (32) at the moment of reading.

6. The device for producing weld seams running along spatial intersection curves which are extendible along a level according to claim 5,
**characterized in that**
the energy supply to the guiding machine (16) is at a low voltage which the latter receives optionally by way of an attachment plug (36) from a fixed power supply or a battery wagon (37) attached to the guiding machine (16) and drawn by it, designed in the same way as latter on the running gear side.

7. The device for producing weld seams running along spatial intersection curves which are extendible along a level according to claim 6,
**characterized in that**
the guiding machine (16) possesses a fall protection (38) on its machine body (17) which meshes with the rack (7) of the guide rail (4) and possesses a dead motion zone which enables unhindered reversing motions along the guide rail (4).

## Revendications

1. Dispositif pour la réalisation de cordons de soudure s'étendant le long de courbes se découpant spatialement et pouvant se dérouler sur une surface pour connexion de charpente tubulaire hyperlourde sur jonctions de tuyaux (1) sous forme d'une machine de guidage (16) pouvant se déplacer sur des rails de guidage (4) à deux fils, dans lequel les rails de guidage (4) sont composés de segments de rails individuels (5), une crémaillère (7) est présente dans les rails de guidage (4), dans laquelle s'engrène un pignon (21) entraîné au moyen d'un premier entraînement (23) situé dans le corps de la machine (17), et la machine de guidage (16) est reliée à un ordinateur de commande (31) qui en commande le mouvement qui peut en outre être influencé par un dispositif de télécommande manuel (35), et un enregistrement du comportement de mouvement de la machine de guidage (16) par l'ordinateur de système (32), dans lequel les deux fils de rail (12) sont guidés l'un par rapport à l'autre, au moyen de joints qui peuvent être de type à liaison par force ou par matière, de sorte qu'un mouvement relatif le long de l'axe de fils de rail soit empêché et l'écartement des voies du rail de guidage (4) soit maintenu constant ; et
l'extension des segments de rails (5) dans une direction perpendiculaire au fil de rail (12) et perpendiculaire à l'écartement des voies est petite,
**caractérisé en ce que**
le rail de guidage (4) est adapté à la forme de la courbe se découpant spatialement en étant composé de segments de rails (5) qui sont plats en leur état original, préformés selon le déroulement des courbes se découpant et géométriquement différents les uns des autres, lesdits segments de rail étant subdivisés et relies les uns aux autres par des connecteurs de segments positives (6) de sorte à permettre un aboutement sans soudures des crémaillères (7) et des fils de rails (12) aux jointures et que les rails de guidage (4) soient fixés à l'élément plus grand ou plus petit des jonctions de tuyaux (2, 3), au moyen de liaisons par forme et/ou par force, à une distance normale constante du joint de soudure ; et
qu'une machine de guidage (16) commandée par programme et composée d'un corps de machine (17) et deux bâtis tournants (18), (19), qui portent chacun au moins trois rouleaux-conducteurs (20), peut se déplacer sur le rail de guidage (5), dans lequel au moins un rouleau-conducteur (20) d'un bâti tournant (18), (19) peut rouler sur chaque fil de rail (12) et est en prise avec celui-ci, précontraint non seulement par forme mais aussi par force,
dans lequel le premier bâti tournant (18) situé plus prêt du collet (22) possède, avec le corps de la machine (17), un axe de rotation perpendiculaire à la tangente à la trajectoire et la normale à la trajectoire imposées par le cours des fils de rails (12) et un axe de rotation autour de la normale à la trajectoire, et le deuxième bâti tournant (19) est déplaçable relatif au corps de la machine (17) par un joint à billes.

2. Dispositif pour la réalisation de cordons de soudure s'étendant le long de courbes se découpant spatialement et pouvant se dérouler sur une surface selon la revendication 1,
**caractérisé en ce que**
le corps de la machine (17) contient deux autres entraînements, le second entraînement (24) et le troisième entraînement (25), qui permettent le mouvement d'un collet (22), qui fait partie du corps de la machine (17), le long des deux axes de mouvement perpendiculaires l'un à l'autre et perpendiculaires à la direction de mouvement imposée par le rail de guidage (16).

3. Dispositif pour la réalisation de cordons de soudure s'étendant le long de courbes se découpant spatialement et pouvant se dérouler sur une surface selon la revendication 2,
**caractérisé en ce que**
la structure de la transmission disposée entre le corps de la machine (17) et le collet (22) et entraînée par les entraînements (24, 25) est composée d'une combinaison d'une manivelle parallèle (26) et d'un guidage linéaire (34).

4. Dispositif pour la réalisation de cordons de soudure s'étendant le long de courbes se découpant spatialement et pouvant se dérouler sur une surface selon la revendication 2,
**caractérisé en ce que**
le collet (22) est relié au corps de la machine (17) par trois barres de couplage (39, 40, 41) et des joints spatials (42, 43, 44, 45, 46, 47) de sorte à être déplaçable sur une surface perpendiculaire à la direction tangentielle des fils de rails (12) et que les deux entraînements, le second entraînement (24) et le troisième entraînement (25), les deux solidaires du corps de la machine (17), soient chacun couplés au collet (22) par l'intermédiaire d'un levier coudé (48, 49) et des barres de couplage (50, 51).

5. Dispositif pour la réalisation de cordons de soudure s'étendant le long de courbes se découpant spatialement et pouvant se dérouler sur une surface selon la revendication 4,
**caractérisé en ce que**
chaque segment (5) de rail est prévu, dans une position définie, d'un codage de segment (14) lisible électriquement, photo-optiquement, inductivement, capacitivement ou tactilement, qui est lu par un détecteur de codage (27) se trouvant dans le corps de la machine (17) et peut être envoyé vers l'ordinateur de système (32) au moment de la lecture.

6. Dispositif pour la réalisation de cordons de soudure s'étendant le long de courbes se découpant spatialement et pouvant se dérouler sur une surface selon la revendication 5,
**caractérisé en ce que**
l'alimentation en énergie de la machine de guidage (16) est effectuée en basse tension que celle-ci reçoit au choix par l'intermédiaire d'un connecteur (36) à partir d'une alimentation en courant fixe ou d'un wagon à batterie (37) accroché à la machine de guidage (16) et tiré par elle, construit identiquement à celle-ci du côté du train d'atterrissage.

7. Dispositif pour la réalisation de cordons de soudure s'étendant le long de courbes se découpant spatialement et pouvant se dérouler sur une surface selon la revendication 6,
**caractérisé en ce que**
la machine de guidage (16) possède, sur son corps de machine (17), une protection contre la chute (38) qui s'engrène dans la crémaillère (7) du rail de guidage (4) et possède une zone de mouvement morte qui permet des mouvements réversibles libres le long du rail de guidage (4).
